# EUROPEAN PATENT APPLICATION

(11) **EP 3 296 935 A1**
(43) Date of publication of application: **21.03.2018**
(21) Application number: 15891893.8
(22) Date of filing: 21.05.2015
(51) Int. Cl.: G06Q 10/06

(54) **DEVICE CHECK SUPPORT SYSTEM, WORK PROGRESS CONFIRMATION METHOD, AND WORK PROGRESS CONFIRMATION PROGRAM**

(30) Priority: 12.05.2015 JP 2015097339
(71) Applicant: Hitachi Systems, Ltd., Tokyo 141-8672 (JP)
(72) Inventor: ITAKO, Yurika, Tokyo 141-8672 (JP)
(74) Representative: Locas, Davide
(86) International application number: PCT/JP2015/064604
(87) International publication number: WO 2016/181569

(57) **Abstract**

In a device check support system including a worker terminal, a work progress management system connected to the worker terminal via a network, and an administrator terminal connected to the work progress management system via a network, the work progress management system has a work progress display unit that causes a display of the administrator terminal to display a work progress checking screen including a work time that is a time taken for a work and a standard work time that is a standard time required for the work.

## Description

### TECHNICAL FIELD

The present invention relates to a device check support system, a work progress checking method, and a work progress checking program.

### BACKGROUND ART

An operation of each device (e.g., a server or a peripheral device of the server) that has been undertaken from a client is managed while the device is housed in each rack of a data center. In addition, a check work (hereinafter, also simply referred to as a device check work) for each device housed in the rack based on a checklist is regularly performed. In the device check work, a person in charge determines whether a failure has occurred in each device by, for example, opening a door of the rack, and then, looking at a light source (e.g., an LED lamp) provided to each device to check a color of the light source. In addition, each person in charge writes down a checked result of each device on a checklist. Further, a reviewer such as supervisor of each person in charge checks and reviews an enormous amount of checklists submitted by the person in charge.

Japanese Patent Application Laid-open Publication 2012-54755 discloses a technique in which "a server for work management has: a work procedure DB that stores a work checklist; a work record DB that stores a work checklist for a performed work; a work checklist assembly processing unit that generates a work checklist based on a work condition specification from a terminal, that transmits the work checklist to the terminal, and that registers the work checklist in the work record DB; a work state input processing unit that accesses the assembled work checklist in response to a request from the terminal and that performs input processing of a performed-work check and confirmation of completion; and a work record registration processing unit that receives the work checklist including performed-work information transmitted from the terminal and that registers the work checklist in the work record DB", and discloses that "the work checklist assembly processing unit automatically generates a work checklist for a subsequent work from a work result of a previous work".

### RELATED ART DOCUMENT

### PATENT DOCUMENT

Patent Document 1: Japanese Patent Application Laid-open Publication 2012-54755

### SUMMARY OF THE INVENTION

### PROBLEMS TO BE SOLVED BY THE INVENTION

According to the technique disclosed in Patent Document 1, an execution time taken for the device check work can be registered in the work record DB. However, even if the registered execution time has been checked, a reviewer who reviews the result of the device check work could not have determined whether the time taken for the device check work is appropriate in some cases.

An object of the present invention is to provide a technique by which it can be determined whether the time taken for the device check work is appropriate.

### MEANS FOR SOLVING THE PROBLEMS

The typical summary of the inventions disclosed in the present application will be briefly described as follows.

A device check support system according to an embodiment of the present invention has: a worker terminal; a work progress management system connected to the worker terminal via a network; and an administrator terminal connected to the work progress management system via a network. The work progress management system has a work progress display unit that causes a display of the administrator terminal to display a work progress checking screen including a work time that is a time which has been taken for a work and including a standard work time that is a standard time required for the work.

Further, a work progress checking method according to an embodiment of the present invention is a work progress checking method in a device check support system including: a worker terminal; a work progress management system connected to the worker terminal via a network; and an administrator terminal connected to the work progress management system via a network. The method has a work progress checking screen display step of causing a work progress display unit of the work progress management system to display a work progress checking screen including a work time that has been taken for a work and a standard work time that is a standard time required for the work on a display of the administrator terminal.

In addition, a work progress checking program according to an embodiment of the present invention is a work progress checking program executed by a computer of a work progress management system having a work progress display unit that displays a screen for checking the work progress on a display of an administrator terminal. The work progress checking program causes the computer to execute a work progress checking screen display step of causing the work progress display unit to display a work progress checking screen including a work time that has been taken for a work and a standard work time that is a standard time required for the work on the display of the administrator terminal.

### EFFECTS OF THE INVENTION

The effects obtained by typical aspects of the present invention will be briefly described below.

According to a typical embodiment of the present invention, it can be determined whether a time taken for a device check work is appropriate.

### BRIEF DESCRIPTIONS OF THE DRAWINGS

FIG. 1 is a diagram showing an outline of a configuration example of a device check support system according to an embodiment of the present invention;
FIG. 2 is a diagram showing an outline of a configuration example of a work information table stored in a work information storage unit of a work progress management system according to an embodiment of the present invention;
FIG. 3 is a table showing an outline of a configuration example of a checklist table stored in a work information storage unit of a work progress management system according to an embodiment of the present invention;
FIG. 4 is a diagram showing an outline of a configuration example of a work result table stored in a work result storage unit of a work progress management system according to an embodiment of the present invention;
FIG. 5 is a diagram showing an outline of a configuration example of a check result table stored in a work result storage unit of a work progress management system according to an embodiment of the present invention;
FIG. 6 is a diagram showing an outline of a configuration example of a message table stored in a message storage unit of a work progress management system according to an embodiment of the present invention;
FIG. 7 is a diagram showing an outline of a check screen displayed on a display of a worker terminal according to an embodiment of the present invention;
FIG. 8 is a diagram showing an outline of a work progress checking screen displayed on a display of an administrator terminal according to an embodiment of the present invention;
FIG. 9 is a diagram showing an outline of a work review screen displayed on a display of an administrator terminal according to an embodiment of the present invention;
FIG. 10 is a diagram showing an outline of a message input screen displayed on a display of an administrator terminal according to an embodiment of the present invention;
FIG. 11 is a diagram showing an outline of a work result storage processing according to an embodiment of the present invention; and
FIG. 12 is a diagram showing an outline of a feedback message storage processing according to an embodiment of the present invention.

### BEST MODE FOR CARRYING OUT THE INVENTION

Hereinafter, embodiments of the present invention will be described in detail with reference to the accompanying drawings. Note that the same components are denoted by the same reference symbols in principle throughout all the drawings for describing the embodiments, and the repetitive description thereof will be omitted.

### <System Configuration>

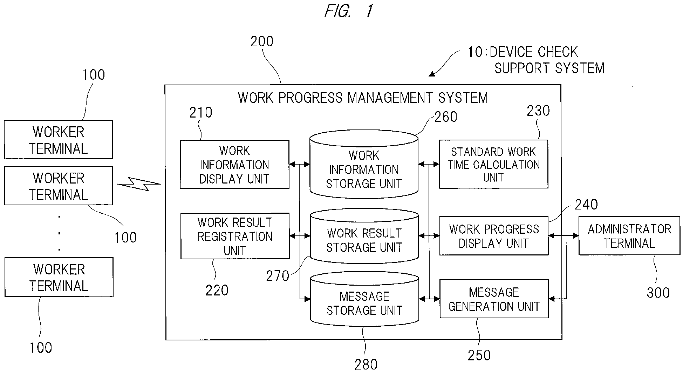

FIG. 1 is a diagram showing an outline of a configuration example of a device check support system 10 according to an embodiment of the present invention.

As shown in FIG. 1, the device check support system 10 includes: a worker terminal 100 (a tablet terminal or others); a work progress management system 200 connected to the worker terminal 100 via a network; and an administrator terminal 300 connected to the work progress management system 200 via a network. For example, the worker terminal 100 and the work progress management system 200 are connected to each other via wireless communication, and the work progress management system 200 and the administrator terminal 300 are connected to each other via wired communication. Note that the work progress management system 200 and the administrator terminal 300 may also be connected to each other via wireless communication.

Further, the worker terminal 100, the work progress management system 200, and the administrator terminal 300 are implemented by predetermined hardware and software. For example, the worker terminal 100, the work progress management system 200, and the administrator terminal 300 are configured by a computer having a processor, a memory, and others, and a program on the memory executed by the processor causes the computer to function as each of the worker terminal 100, the work progress management system 200, and the administrator terminal 300.

The worker terminal 100 transmits and receives wireless signals to and from the work progress management system 200 via wireless communication. Here, as the wireless communication, any existing wireless communication standard/means can be adopted. As examples, Bluetooth (registered trademark), a wireless LAN standard, a 3G network of mobile phone network, infrared ray, Zigbee (registered trademark), analog wireless communication, and others can be cited.

A display (not shown) of the worker terminal 100 displays a screen, and accepts an operation from a user through a touch panel. Then, the worker terminal 100 executes processing corresponding to a position in the acceptance of the touch work.

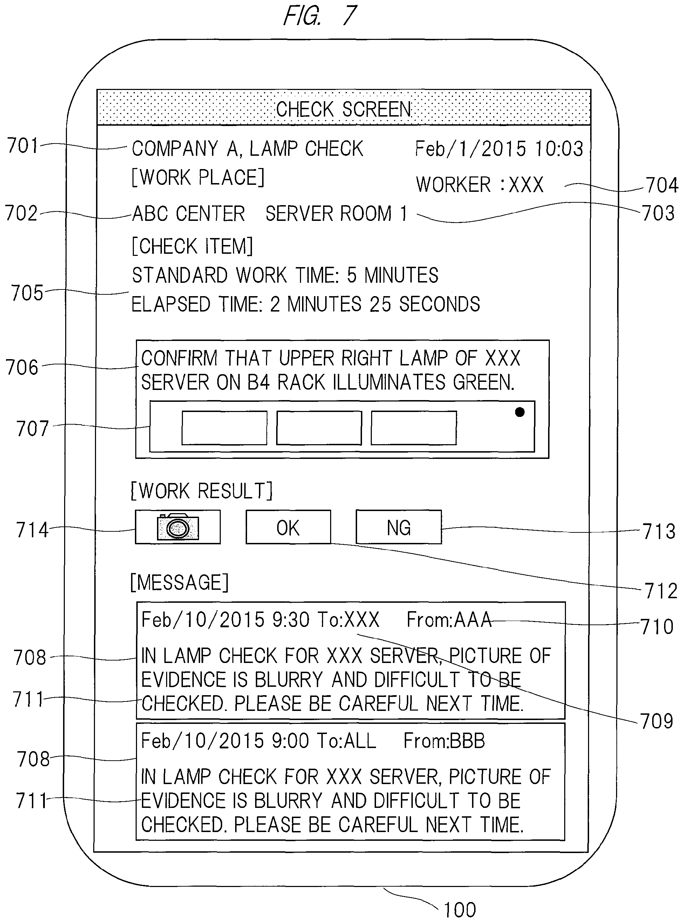

The display of the worker terminal 100 accepts an input of information indicating whether a checked result of a check item constituting the work is normal or not, and displays a check screen (described later in FIG. 7) including a message fed back from an administrator (a reviewer who reviews the device check work by a worker, or an approver who approves a review result by the reviewer).

While checking a message through a device check screen displayed on the display, a worker who performs the device check work inputs, to the worker terminal 100, work result information indicating a result of the device check work (such as information indicating whether the checked result of the check item constituting the work is normal or not). Then, the worker terminal 100 sequentially transmits the input work result information to the work progress management system 200. The work result information transmitted to the work progress management system 200 is stored in a work result storage unit 270 by the work progress management system 200.

Further, the worker terminal 100 has a picture-capturing unit (not shown) such as a camera. The picture-capturing unit captures a picture of a subject, for example, after completion of the device check work. In this manner, a work evidence can be left.

The work progress management system 200 includes a work information display unit 210, a work result registration unit 220, a standard work time calculation unit 230, a work progress display unit 240, a message generation unit 250, a work information storage unit 260, the work result storage unit 270, and a message storage unit 280.

The work information display unit 210 causes the display of the worker terminal 100 to display the check screen.

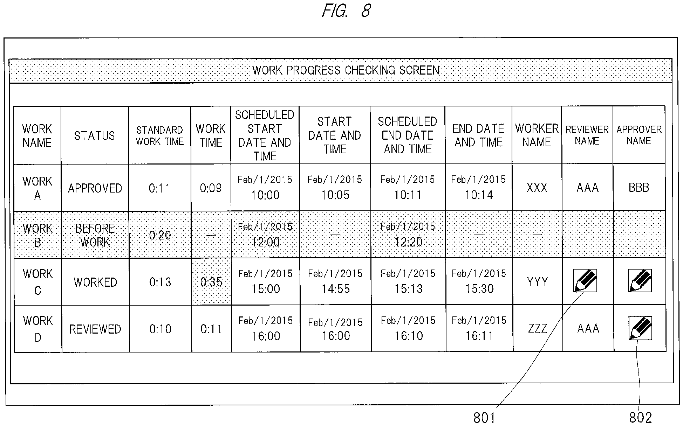

The work progress display unit 240 causes the display of the administrator terminal 300 which is used for checking of a progress status of the device check work and others to display a work progress checking screen (described later in FIG. 8) including a work time that has been taken for the work and a standard work time that is a standard time required for the work. Further, the work progress display unit 240 causes the display of the administrator terminal 300 to display the work progress checking screen in a mode capable of distinguishing the standard work time from a work time that is equal to or longer than the standard work time by a predetermined time (e.g., 5 minutes) or a work time that is equal to or shorter than the standard work time by a predetermined time (e.g., 5 minutes) . Further, the work progress display unit 240 causes the display of the administrator terminal 300 to display the work progress checking screen while changing at least one or more of display modes of a work name of a work that has not been started yet even after a scheduled start date and time which is a scheduled date and time at which the work is to be started, a status indicating a progress status of the work, the standard work time, the scheduled start date and time, a scheduled end date and time which is a scheduled date and time at which the work is to be ended, and a worker name.

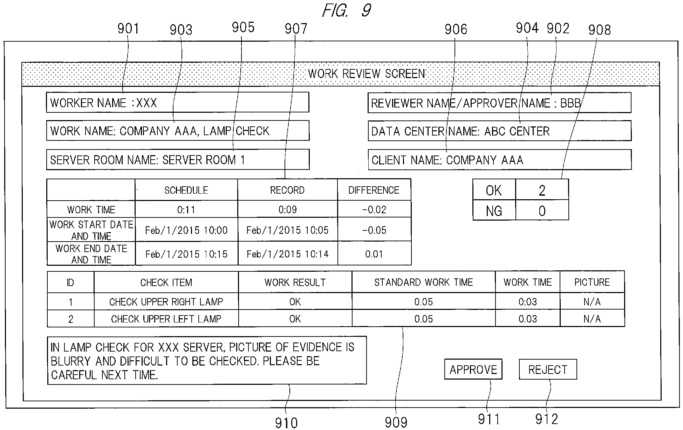

The work progress display unit 240 causes the display of the administrator terminal 300 to display a work review screen (described later in FIG. 9) including the number of check items for which the checked result has been confirmed to be normal and the number of check items for which the checked result has been confirmed to be abnormal.

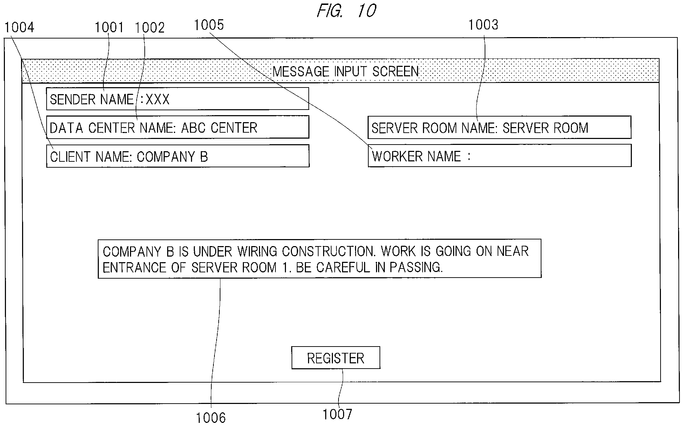

Further, the work progress display unit 240 causes the display of the administrator terminal 300 to display a message input screen (described later in FIG. 10) that accepts an input of a message to be transmitted to the worker terminal 100.

Based on the already-accumulated work time, the standard work time calculation unit 230 calculates an updated standard work time every time a new work time is transmitted from the worker terminal 100. For example, the standard work time calculation unit 230 calculates the standard work time by taking statistics on the work time for each check item. Specifically, the standard work time calculation unit 230 calculates an average value of the work time as the standard work time. Note that the standard work time calculation unit 230 may periodically calculate the updated standard work time based on the already-accumulated work time.

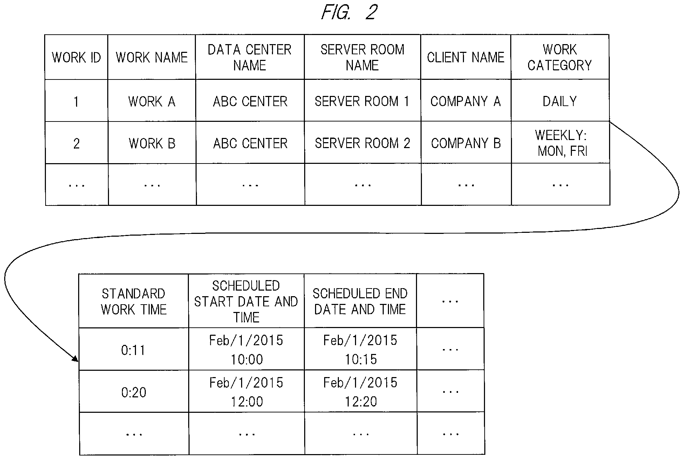

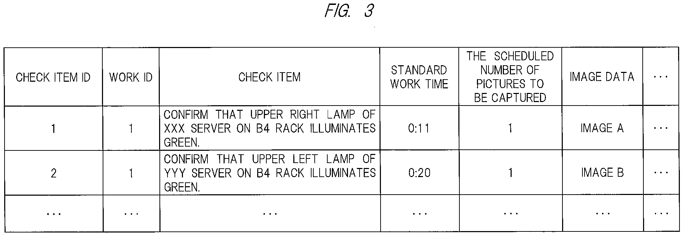

The work information storage unit 260 stores a work information table (described later in FIG. 2) and a checklist table (described later in FIG. 3).

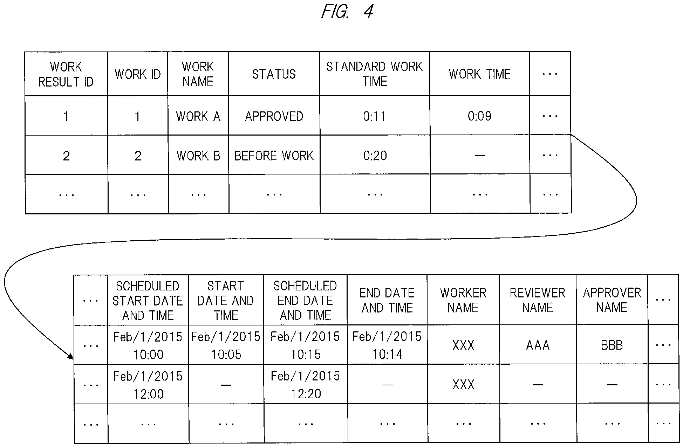

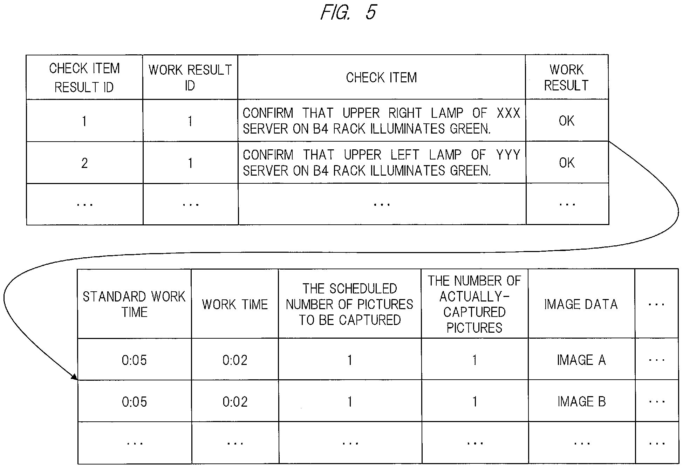

The work result storage unit 270 stores a work result table (described later in FIG. 4) and a check result table (described later in FIG. 5).

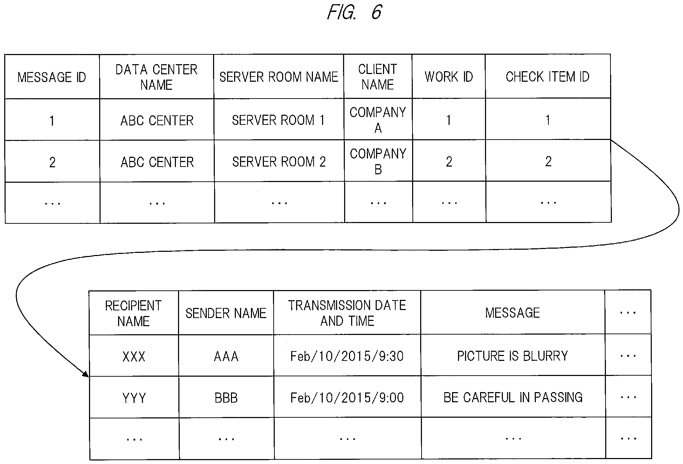

The message storage unit 280 stores a message table (described later in FIG. 6).

The display of the administrator terminal 300 displays the work progress checking screen. By checking the work progress checking screen, the administrator can check the progress status of the device check work. For example, through the work progress checking screen, the administrator confirms existence of a device check work that has not been started yet even after the scheduled start date and time which is a scheduled date and time at which the work is to be started. Then, the administrator switches the screen displayed on the display of the administrator terminal 300 from the work progress checking screen to the message input screen. Then, through the message input screen, the administrator can attract attention to the worker terminal 100 by inputting a message that indicates prompt start of the work. If the administrator desires to check details of a work result of the device check work, the administrator terminal 300 accepts an input for switching the screen displayed on the display from the work progress checking screen to the work review screen.

Then, the display of the administrator terminal 300 displays the work review screen including information on the details of the work result. By checking the work review screen, the administrator can check the checked result of the check item constituting the work, the time that has been taken for the work, and others. Then, after the contents displayed on the work review screen has been checked by the administrator, the administrator terminal 300 accepts an input for rejecting or approving the device check work. In addition, the administrator terminal 300 accepts an input of a message showing precautions on performing the device check work from the administrator through the work review screen. The message input through the work review screen is included in the check screen displayed on the display of the worker terminal 100 at a next device check work. This manner can prevent repeat of a work mistake as similar to that in the contents being fed back from the administrator terminal 300 by a worker.

The display of the administrator terminal 300 displays the message input screen. The administrator accepts an input of precautions or instruction messages to be transmitted to the worker terminal 100 through the message input screen.

### <Work Information Table>

FIG. 2 is a diagram showing an outline of a configuration example of the work information table stored in the work information storage unit 260 of the work progress management system 200 according to an embodiment of the present invention. As shown in FIG. 2, the work information table includes data items such as [Work ID], [Work name], [Data center name], [Server room name], [Client name], [Work category], [Standard work time] [Scheduled start date and time], and [Scheduled end date and time].

The item [Work ID] indicates a code to identify a work (checklist) . The item [Work name] indicates a name of the work. The item [Data center name] indicates a name of a data center. The item [Server room name] indicates a name of a server room. The item [Client name] indicates a name of a client. The item [Work category] indicates an interval between the works performed. The item [Standard work time] indicates a standard time that is required for the work. The item [Scheduled start date and time] indicates a scheduled date and time when the work is to be started. The item [Scheduled end date and time] indicates a scheduled date and time when the work is to be ended.

### <Checklist Table>

FIG. 3 is a diagram showing an outline of a configuration example of the checklist table stored in the work information storage unit 260 of the work progress management system 200 according to an embodiment of the present invention. As shown in FIG. 3, the checklist table includes data items such as [Check item ID], [Work ID], [Check item], [Standard work time], [Scheduled number of pictures to be acquired], and [Image data].

The item [Check item ID] indicates a code to identify a check item. The item [Check item] indicates details of a device check work corresponding to the check item. The item [Scheduled number of pictures to be acquired] indicates the number of pictures to be captured by a worker. The item [Image data] is screen data to display an image for explaining a procedure of the device check work and others.

### <Work Result table>

FIG. 4 is a diagram showing an outline of a configuration example of the work result table stored in the work result storage unit 270 of the work progress management system 200 according to an embodiment of the present invention. As shown in FIG. 4, the work result table includes data items such as [Work result ID], [Work ID], [Work name], [Status], [Standard work time], [Work time], [Data center name] (not shown), [Server room name] (not shown), [Client name] (not shown), [Scheduled start date and time], [Start date and time], [Scheduled end date and time], [End date and time], [Worker name], [Reviewer name], and [Approver name].

The item [Work result ID] indicates a code to identify a work result. The item [Status] indicates a progress status of the work. The item [Work time] indicates a time that has been actually taken for the work. The item [Start date and time] indicates a date and time when the work has been started. The item [End date] indicates a date and time when the work has been ended. The item [Worker name] indicates a name of a worker. The item [Reviewer name] indicates a name of a reviewer. The item [Approver name] indicates a name of an approver.

### <Check Result Table>

FIG. 5 is a diagram showing an outline of a configuration example of the check result table stored in the work result storage unit 270 of the work progress management system 200 according to an embodiment of the present invention. As shown in FIG. 5, the check result table includes data items such as [Check item result ID], [Work result ID], [Check item], [Work result] [Standard work time], [Work time], [Scheduled number of pictures to be captured], [The number of actually-captured pictures], and [Image data].

The item [Check item result ID] indicates a code to identify a check item result, which is a checked result of the check item. The item [Work result] indicates a result of the device check work. For example, "OK" indicates that the checked result of the check item is normal. On the other hand, "NG" indicates that the checked result of the check item is abnormal. The item [The number of actually-captured pictures] indicates the number of pictures captured by the worker.

### <Message Table>

FIG. 6 is a diagram showing an outline of a configuration example of the message table stored in the message storage unit 280 of the work progress management system 200 according to an embodiment of the present invention. As shown in FIG. 6, the message table includes data items such as [Message ID], [Data center name], [Server room name], [Client name], [Work ID], [Check item ID], [Recipient name], [Sender name], [Transmission date and time], and [Message].

The item [Message ID] indicates a code to identify a message. The item [Recipient name] indicates a name of a person who has received the message. The item [Sender name] indicates a name of a person who has sent the message. The item [Transmission date and time] indicates a date and time when the message has been sent. The item [Message] indicates contents of the message such as precautions on performing the device check work, fed back by the administrator.

### <Check Screen>

FIG. 7 is a diagram showing an outline of the check screen displayed on the display of the worker terminal 100 according to an embodiment of the present invention. As shown in FIG. 7, the check screen displays a work name 701, a data center name 702, a server room name 703, a worker name 704, a standard work time 705, details 706 of the device check work corresponding to the check item, an image 707 to explain a procedure the device check work and others of, a message display column 708, an OK button 712, an NG button 713, and a picture-capturing button 714.

The check screen displays a time elapsed from start of the work to a current point, together with the standard work time 705. In this manner, the worker can efficiently perform the device check work while being aware of the standard time required for the work.

The check screen displays the image 707 to explain the procedure of the device check work and others, together with the details 706 of the device check work corresponding to the check item. In this manner, the worker can easily recognize the details of the device check work.

Further, the message display column 708 of the check screen displays a recipient name 709, a sender name 710, and a message 711 that is precautions on performing the device check work, fed back by the administrator.

When the OK button 712 is pressed, the worker terminal 100 accepts an input of information indicating that the checked result of the check item is normal.

When the NG button 713 is pressed, the worker terminal 100 accepts an input of information indicating that the checked result of the check item is abnormal.

When the picture-capturing button 714 is pressed, the display of the worker terminal 100 displays an image screen which is a screen for observing a subject. Then, when a shutter button (not shown) is pressed, the worker terminal 100 acquires image data of the subject.

### <Work Progress Checking Screen>

FIG. 8 is a diagram showing an outline of the work progress checking screen displayed on the display of the administrator terminal 300 according to an embodiment of the present invention. As shown in FIG. 8, the work progress checking screen displays a list of a work name, a status, a standard work time, a work time, a scheduled start date and time, a start date and time, a scheduled end date and time, an end date and time, a worker name, a reviewer name, and an approver name so as to be in association with one another.

The work progress checking screen displays information (such as a work name, a status, a standard work time, a work time, a scheduled start date and time, a start date and time, a scheduled end date and time, and an end date and time) on a work that has not been started yet even after the scheduled start date and time, and information on other work (such as a work of which a scheduled start date and time has not come yet, or a work that has been already started) so that they can be distinguished from each other. For example, the display displays a color of a background showing the information on the work that has not started yet even after the scheduled start date and time in a different color from that of information on other work. In this manner, the administrator can distinguish the work of which the scheduled start date and time has not come yet.

Additionally, the display displays the standard work time, a work time having a gap from the standard work time by a predetermined time (e.g., 5 minutes) or longer, and a work time having no gap from the standard work time by the predetermined time or longer, so as to be capable of distinguishing from one another. For example, the display displays a color of a background showing the work time longer than the standard work time by the predetermined time or longer and the work time shorter than the standard work time by the predetermined time or longer in a different color from a color of a background showing the standard work time and the work time (other work time) having no gap from the standard work time by the predetermined time or longer. In this manner, it can be determined whether the time taken for the device check work is appropriate.

A review button 801 is displayed in a region where a reviewer name in a record with a status indicating the completion of the work is displayed.

An approval button 802 is displayed in a region where an approver name in a record with a status indicating the completion of the work or the completion of the review is displayed.

When the review button 801 or the approval button 802 is selected, the display of the administrator terminal 300 displays the work review screen (described later in FIG. 9).

### <Work Review Screen>

FIG. 9 is a diagram showing an outline of the work review screen displayed on the display of the administrator terminal 300 according to an embodiment of the present invention. As shown in FIG. 9, the work review screen displays a worker name 901, a reviewer name or approver name 902, a work name 903, a data center name 904, a server room name 905, a client name 906, a time information display column 907, a check result display column 908, a check result display column 909, a message input column 910, an approval button 911, and a rejection button 912.

The time information display column 907 shows a standard work time which is a standard time that is required for the work, a work time which is a time that has been actually taken for the work, and a difference between the standard work time and the work time. The time information display column 907 also shows a scheduled start date and time which is a scheduled date and time at which the work is to be started, a start date and time which is a date and time when the work has been started, and a difference between the scheduled start date and time and the start date and time. The time information display column 907 also shows a scheduled end date and time which is a scheduled date and time at which the work is to be ended, an end date and time which is a date and time when the work has been ended, and a difference between the scheduled end date and time and the end date and time.

The check result display column 908 shows the number of check items for which the result has been confirmed to be normal and the number of check items for which the result has been confirmed to be abnormal.

The check result display column 909 shows a list of a check item result ID (ID in the drawing), a check item, a work result, a standard work time, a work time, and information indicating whether a picture has been captured by a worker so as to be in association with one another.

Into the message input column 910, a message such as precautions on performing the device check work fed back by the administrator is input.

When the approval button 911 is selected, the work is approved. On the other hand, when the rejection button 912 is selected, the work is rejected.

### <Message Input Screen>

FIG. 10 is a diagram showing an outline of the message input screen displayed on the display of the administrator terminal 300 according to an embodiment of the present invention. As shown in FIG. 10, the message input screen displays a sender name 1001, a data center name 1002, a server room name 1003, a client name 1004, a worker name 1005, a message input column 1006, and a registration button 1007.

The administrator terminal 300 accepts an input of a message from the administrator. Then, the message input column 1006 shows the message, an input of which has been accepted from the administrator.

When the registration button 1007 is selected, the message shown in the message input column 1006 is transmitted to the worker terminal 100 specified by the worker name 1005. Then, the transmitted message is displayed on the display of the worker terminal 100 through the check screen (described above in FIG. 7) . In this manner, a message such as precautions or instruction messages can be transmitted from the administrator terminal 300 to the worker terminal 100 at any time.

When the registration button 1007 is selected, note that the message shown in the message input column 1006 may be transmitted to all the worker terminals 100 in a data center specified by the data center name. Moreover, when the registration button 1007 is selected, the message shown in the message input column 1006 may be transmitted to the worker terminals 100 of all the workers in a server room specified by the server room name. In this manner, the message such as precautions or instruction messages can be transmitted in terms of not only the worker but also the data center or the server room.

### <Work Result Storage Processing>

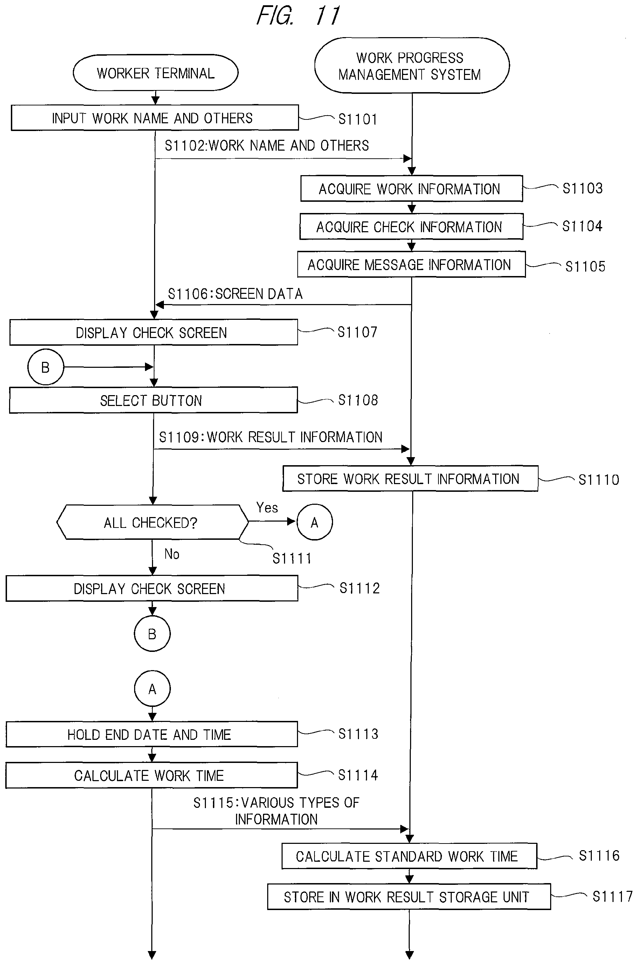

FIG. 11 is a diagram showing an outline of a work result storage processing according to an embodiment of the present invention.

First, in S1101, the worker terminal 100 accepts inputs of a work name and a worker name of the device check work.

Next, in S1102, to the work progress management system 200, the worker terminal 100 transmits the worker name and the work name, inputs of which have been accepted in S1101.

Next, in S1103, the work progress management system 200 receives the worker name and the work name transmitted in S1102. Then, the work information display unit 210 of the work progress management system 200 searches the work information table (described above in FIG. 2) in the work information storage unit 260 while using the work name transmitted in S1102 as key information, and acquires work information including corresponding work ID, data center name, server room name, client name, standard work time, scheduled start date and time, and scheduled end time.

Next, in S1104, the work information display unit 210 searches the checklist table (described above in FIG. 3) in the work information storage unit 260 while using the work ID acquired in S1103 as key information, and acquires all pieces of the check information including corresponding check item ID, check item, standard work time, scheduled number of pictures to be captured, and image data.

Next, in S1105, the work information display unit 210 searches the message storage unit 280 while using the work ID acquired in S1103 as key information, and acquires message information including corresponding worker name, sender name, transmission date and time, and message.

Next, in S1106, to the worker terminal 100, the work information display unit 210 transmits screen data based on the work name and the worker name, inputs of which have been accepted in S1101, the data center name and the server room name that have been acquired in S1103, the check item acquired in S1104, an image based on the image data acquired in S1104, the worker name, the sender name, the transmission date and time, and the message that have been acquired in S1105. Then, in S1107, the worker terminal 100 displays the check screen (described above in FIG. 7) based on the transmitted screen data, on the display of the worker terminal 100. Through the processes of S1106 and S1107, the work information display unit 210 causes the display of the worker terminal 100 to display the check screen. Note that the work information display unit 210 causes the display of the worker terminal 100 to display the check screen including the check item at a head of the checklist. In addition, the worker terminal 100 holds the date and time at which the check screen has been displayed on the display, as the start date and time.

Next, in S1108, the worker terminal 100 accepts an input for selecting either the OK button 712 or the NG button 713. Then, the working terminal 100 calculates time from the start date and time held in S1107 to the date and time when the input for selecting the button has been accepted, as the work time.

Next, in S1109, to the work progress management system 200, the worker terminal 100 transmits the check item, the work result (information indicating which button (OK button 712 or NG button 713) has accepted the input in S1108), the standard work time, and the work time calculated in S1108, as work result information.

Next, in S1110, the work progress management system 200 receives the work result information transmitted in S1109. Then, the work result registration unit 220 of the work progress management system 200 allocates a check result item ID and a work result ID to the received work result information, and stores the check result item ID, the work result ID, and the work result information into the work result storage unit 270 so as to be in association with one another. As a result, a new record is added to the check result table (described above in FIG. 5).

Next, in S1111, , for all check items included in the checklist, the worker terminal 100 determines whether either of the OK button 712 and the NG button 713 has accepted the input in S1107 . As a result, for all the check items, the worker terminal 100 determines whether the work has been performed. When the worker terminal 100 determines that the work has been completed for all the check items (S1111 - Yes), the process proceeds to S1113. On the other hand, if the worker terminal 100 determines that the input has not been received for all the check items (S1111 - No), the process proceeds to S1112.

Next, in S1112, the worker terminal 100 causes the display of the worker terminal 100 to display the check screen including a check item in which the device check work has not been completed yet, the check item being included in the checklist. Note that the worker terminal 100 causes the display of the worker terminal 100 to display the check screen including a check item to be displayed next to the previously-displayed check item. After S1112, the process returns to S1108.

In the case of "Yes" in S1111, in S1113, the worker terminal 100 holds the date and time when the button (OK button 712 or NG button 713) has accepted the last input in S1008, as the end date and time.

Next, in S1114, the worker terminal 100 calculates time from the start date and time held in S1007 to the end date and time held in S1113, as the work time.

Next, in S1115, to the work progress management system 200, the worker terminal transmits the work name and the worker name, inputs of which have been accepted in S1101, the work ID, the standard work time, the scheduled start date and time, and the scheduled end date and time, which have been acquired in S1103, the start date and time held in S1107, the end date and time held in S1113, and the work time, which have been calculated in S1114.

Next, in S1116, the standard work time calculation unit 230 of the work progress management system 200 calculates an updated standard work time based on the work time transmitted in S1115 and the standard work time.

Next, in S1117, into the work result storage unit 270, the work progress management system 200 stores a work result ID, a status indicating the completion of the work, the work ID, the work name, the work time, the scheduled start date and time, the start date and time, the scheduled end date and time, the end date and time, and the worker name that have been transmitted in S1115, and the updated standard work time calculated in S1116 so as to be in association with one another. As a result, a new record is added to the work result table (described above in FIG. 4).

### <Feedback Message Storage Process>

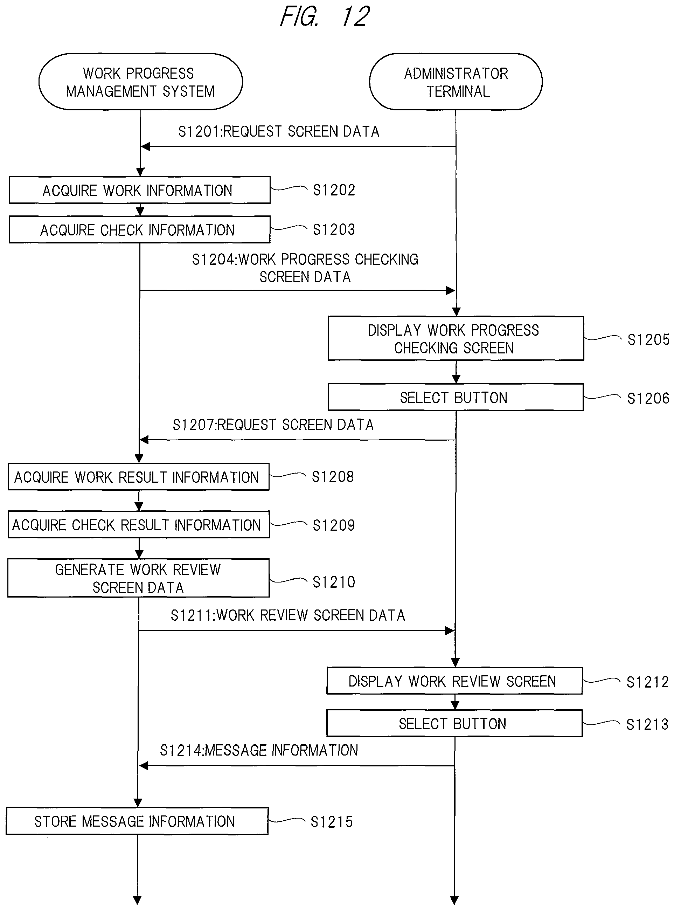

FIG. 12 is a diagram showing an outline of a feedback message storage processing according to an embodiment of the present invention.

First, in S1201, the administrator terminal 300 requests work progress checking screen data to the work progress management system 200.

Next, in S1202, from the work result table (described above in FIG. 4) stored in the work result storage unit 270, the work progress display unit 240 of the work progress management system 200 acquires a work name, a status, a standard work time, a work time, a scheduled start date and time, a start date and time, a scheduled end date and time, an end date and time, a worker name, a reviewer name, and an approver name.

Next, in S1203, the work progress display unit 240 of the work progress management system 200 generates work progress checking screen data to display the work progress checking screen (described above in FIG. 8), based on the work name, the status, the standard work time, the work time, the scheduled start date and time, the start date and time, the scheduled end date and time, the end date and time, the worker name, the reviewer name, and the approver name that have been acquired in S1202.

Next, in S1204, to the administrator terminal 300, the work progress management system 200 transmits the work progress checking screen data generated in S1203.

Next, in S1205, the administrator terminal 300 displays the work progress checking screen on the display based on the work progress checking screen data transmitted in S1204.

Next, in S1206, the review button 801 or the approval button 802 is selected through the work progress checking screen.

Next, in S1207, the administrator terminal 300 requests work review screen data to the work progress management system 200.

Next, in S1208, from the work result table (described above in FIG. 4) stored in the work result storage unit 270, the work progress display unit 240 of the work progress management system 200 acquires work result information including a worker name, a reviewer name or approver name, a work name, a data center name, a server room name, a client name, a standard work time, a work time, a scheduled start date and time, a start date and time, a scheduled end date and time, and an end date and time. If the review button 801 is selected in S1206, the work progress display unit 240 acquires the reviewer name in S1208. If the approval button 802 is selected in S1206, the work progress display unit 240 acquires the approver name in S1208.

Next, in S1209, from the check result table (described above in FIG. 5) stored in the work result storage unit 270, the work progress display unit 240 acquires check result information including a check item result ID, a check item, a work result, a standard work time, a work time, and the number of actually-captured pictures.

Next, in S1210, the work progress display unit 240 generates work review screen data to display the work review screen (described above in FIG. 9) based on the worker name, the reviewer name or approver name, the work name, the data center name, the server room name, the client name, the standard work time, the work time, the scheduled start date and time, the start date and time, the scheduled end date and time, and the end date and time that have been acquired in S1208, and the check item result ID, the check item, the work result, the standard work time, the work time, and the number of actually-captured pictures, that have been acquired in S1209.

Next, in S1211, to the administrator terminal 300, the work progress management system 200 transmits the work review screen data generated in S1210.

Next, in S1212, the administrator terminal 300 displays the work review screen on the display based on the work review screen data transmitted in S1211.

Next, in S1213, the administrator terminal 300 accepts an input of a message into the message input column 910, and further accepts an input for selecting the approval button 911 or the rejection button 912.

Next, in S1214, the administrator terminal 300 allocates a message ID to the message input into the message input column 910. Then, to the work progress management system 200, the administrator terminal 300 transmits the message ID, the data center name, the server room name, the client name, the work ID, the check item ID, the worker name, the sender name (reviewer name or approver name), the recipient name, the transmission date and time, and the message so as to be in association with one another.

Next, in S1215, into the message storage unit 280, the message generation unit 250 of the work progress management system 200 stores the message ID, the data center name, the server room name, the client name, the work ID, the check item ID, the worker name, the sender name (reviewer name or approver name), the recipient name, the transmission date and time, and the message that have been transmitted in S1214 so as to be in association with one another.

### <Effect of Present Embodiment>

According to the device check support system 10 of the present embodiment described above, the work progress display unit 240 causes the display of the administrator terminal 300 to display the work progress checking screen including the work time that is a time taken for the work and the standard work time that is the standard time required for the work, so that it can be determined whether the time taken for the device check work is appropriate. In addition, the administrator can check whether the work is efficiently being performed or whether the work is reliably being performed.

Further, the work progress display unit 240 causes the display of the administrator terminal 300 to display the standard work time and the work time longer than the standard work time by a predetermined time or longer or the work time shorter than the standard work time by the predetermined time or longer so that the standard work time and the work time can be distinguished from each other. As a result, an inappropriate work time such as too long or too short work time can be determined at one look.

Further, the work progress display unit 240 causes the display to display the work name of the work that has not been started yet even after the scheduled start date and time that is a scheduled date and time at which the work is to be started, the status indicating the progress status of the work, the standard work time, the scheduled start date and time, the scheduled end date and time which is a scheduled date and time at which the work is to be ended, and the worker name, at least one or more of which are changed in a display mode. As a result, the work that has not been started yet even after the scheduled start date and time can be determined at one look.

Further, the standard work time calculation unit 230 calculates the updated standard work time based on the work time. As a result, the standard work time that matches reality of a situation can be calculated.

Further, the work information display unit 210 causes the display of the worker terminal 100 to display the check screen that accepts an input of the information indicating whether the checked result of the check item constituting the work is normal or not. As a result, the device check work can be performed without looking at a check sheet as a paper, so that workability is improved.

Further, the work progress display unit 240 causes the display of the administrator terminal 300 to display the work review screen including the number of the check items for which the checked result has been confirmed to be normal and the number of the check items for which the checked result has been confirmed to be abnormal. As a result, the administrator can recognize the result of the device check work at one look.

In addition, the work information display unit 210 causes the display to display the check screen including the message 711 fed back from the administrator. As a result, the worker can be prevented from repeating the same working mistake as that of the fed-back contents.

In the foregoing, the invention made by the present inventor has been concretely described based on the embodiments. However, it is needless to say that the present invention is not limited to the foregoing embodiments and various modifications and alterations can be made within the scope of the present invention. For example, the worker terminal 100 includes not only tablet terminals but also all various aspects of mobile phones such as smartphones.

### EXPLANATION OF REFERENCE CHARACTERS

10 ... device check support system, 100 ... worker terminal, 200 ... work progress management system, 210 ... work information display unit, 220 ... work result registration unit, 230 ... standard work time calculation unit, 240 ... work progress display unit, 250 ... message generation unit, 260 ... work information storage unit, 270 ... work result storage unit, 280 ... message storage unit, 300 ... administrator terminal

## Claims

1. A device check support system comprising:
a worker terminal;
a work progress management system connected to the worker terminal via a network; and
an administrator terminal connected to the work progress management system via a network,
wherein the work progress management system has a work progress display unit that causes a display of the administrator terminal to display a work progress checking screen including a work time that is a time taken for a work and a standard work time that is a standard time required for the work.

2. The device check support system according to claim 1,
wherein the work progress display unit causes the display to display the standard work time or other work time and the work time that is equal to or longer than the standard work time by a predetermined time or the work time that is equal to or shorter than the standard work time by a predetermined time so that the standard work time or other work time is distinguishable from the work time.

3. The device check support system according to claim 1,
wherein the work progress display unit causes the display to display a work name of a work that has not been started yet even after a scheduled start date and time that is a scheduled date and time at which the work is to be started, a status indicating a progress status of the work, the standard work time, the scheduled start date and time, a scheduled end date and time that is a scheduled date and time at which the work is to be ended, and a worker name, at least one or more of which are changed in a display mode.

4. The device check support system according to claim 1 further comprising
a standard work time calculation unit that calculates the standard work time that has been updated, based on the work time.

5. The device check support system according to claim 1,
wherein the work progress management system further includes a work information display unit that causes a display of the worker terminal to display a check screen that accepts an input of information indicating whether a checked result for a check item constituting the work is normal or not.

6. The device check support system according to claim 5,
wherein the work progress display unit causes the display of the administrator terminal to display a work review screen including the number of the check items for which the checked result has been confirmed to be normal and including the number of the check items for which the checked result has been confirmed to be abnormal.

7. The device check support system according to claim 5,
wherein the work information display unit causes the display to display a check screen including a message fed back from the administrator terminal.

8. The device check support system according to claim 5,
wherein the worker terminal transmits the information, the input of which has been accepted through the check screen, to the work progress management system, and
the work progress management system stores a check item ID to identify the check item and the information transmitted from the worker terminal in association with each other, into a work result storage unit.

9. A work progress checking method in a device check support system including a worker terminal, a work progress management system connected to the worker terminal via a network, and an administrator terminal connected to the work progress management system via a network, comprising:
a work progress checking screen display step of causing a work progress display unit of the work progress management system to display a work progress checking screen including a work time taken for a work and a standard work time that is a standard time required for the work on a display of the administrator terminal.

10. A work progress checking program executed by a computer of a work progress management system having a work progress display unit that causes a display of an administrator terminal to display a screen for checking a work progress,
wherein the work progress display unit causes the computer to execute a work progress checking screen display step of causing the work progress display unit to display a work progress checking screen including a work time taken for a work and a standard work time that is a standard time required for the work on the display of the administrator terminal.
